# EUROPÄISCHE PATENTANMELDUNG

(11) **EP 1 747 923 A2**
(43) Veröffentlichungstag der Anmeldung: **31.01.2007**
(21) Anmeldenummer: 06013324.6
(22) Anmeldetag: 28.06.2006
(51) Int. Cl.: B60J 1/20

(54) **Fensterrollo mit glatten Schubgliedern**

(30) Priorität: 29.07.2005 DE 102005036318
(71) Anmelder: BOS GmbH & Co. KG, 73760 Ostfildern (DE)
(72) Erfinder: Starzmann, Bernd, 73666 Balmannsweiler (DE); Walter, Herbert, 73061 Ebersbach (DE)
(74) Vertreter: Rüger, Barthelt & Abel Patentanwälte

(57) **Zusammenfassung**

Ein Fensterrollo (14) für Kraftfahrzeuge weist neben der Rollobahn (15) Führungsschienen (16) auf. In den Führungsschienen (16) laufen, knicksicher geführt, Schub- bzw. Druckglieder (32,33), die eine glatte Außenseite aufweisen. Der Antrieb dieser Schub- oder Druckglieder (32,33) geschieht mit Hilfe eines Linearantriebs (34), der mit Riemen (41) oder Seilen (58) aufgebaut ist.

## Beschreibung

Aus der DE 100 57 764 sind Heckscheibenrollos bekannt, die eine unter der Hutablage drehbar gelagerte Wickelwelle aufweisen. An der Wickelwelle ist mit einer Kante die Rollobahn befestigt. Die andere Kante der Rollobahn ist mit einem Auszugsprofil verbunden. Das Auszugsprofil ist endseitig in Führungsschienen geführt, die beispielsweise in der Innenverkleidung der C-Säule des Kraftfahrzeugs integriert sind.

Die Rollobahn wird mittels eines Federmotors, der mit der Wickelwelle verbunden ist, gespannt gehalten. Das Ausfahren des Rollos geschieht mit Hilfe von linienförmigen Schubgliedern, die nach Art einer runden Zahnstange ausgeführt sind. Die Schubglieder enthalten eine zylindrische Seele, um die sich herum schraubenförmig eine Wendel windet, so dass eine rundum schräg verzahnte biegeelastische Zahnstange entsteht. Eines der beiden Enden der Zahnstange ist mit den in den Führungsschienen geführten Endstücken des Auszugsprofils verbunden. Von hier aus läuft jedes Schubglied durch die Kammer der Führungsschiene in ein Verbindungsrohr, das am anderen Ende in einem Getriebegehäuse eines Getriebemotors mündet. Der Getriebemotor trägt auf seiner Ausgangswelle drehfest ein Zahnrad, das mit der Verzahnung der Schubglieder kämmt.

Die Praxis mit derartigen Anordnungen hat gezeigt, dass die Wendel auf dem Schubglied Geräusche verursacht, wenn sie über irgendwelche Stoßstellen des Verbindungsrohrs mit dem Getriebegehäuse oder des Verbindungsrohrs mit der Führungsschiene gleitet. Diese Geräusche werden als unbefriedigend empfunden.

Ausgehend der Erfindung ist es deswegen ein neues Fensterrollo zu schaffen, bei dem bei der Betätigung keine Geräusche entstehen, die durch die Schubglieder hervorgerufen werden.

Diese Aufgabe wird erfindungsgemäß mit einem Fensterrollos gelöst, dass die Merkmale des Anspruches 1 aufweist.

Bei dem neuen Fensterrollo ist eine Wickelwelle vorgesehen, an der mit einer Kante die Rollobahn befestigt ist. Der Rollobahnzuschnitt entspricht einer trapezförmigen oder rechteckigen Annäherung des abzuschattenden Fensters.

An der von der Wickelwelle abliegenden Kante ist ein Auszugsprofil vorgesehen, das je nach Ausgestaltung zumindest an einem Ende mittels einer Führungsschiene geführt ist. Ein Federmotor spannt die Wickelwelle im Sinne des Aufwickelns der Rollobahn auf der Wickelwelle vor. Um die Rollobahn entgegen der Kraft des Federmotors von der Wickelwelle abzuziehen und vor dem betreffenden Fahrzeugfenster aufzuspannen, ist wenigstens ein linienförmiges Kupplungsglied vorgesehen, das eine glatte Außenfläche aufweist. Weil die Oberfläche nicht mehr, wie beim Stand der Technik gezahnt, sondern durchgehend glatt ist, können Übergänge und Kanten, an denen sich das Kuppelglied anlegt, wenn es durch die Antriebseinrichtung vorgeschoben oder zurückgezogen wird, keine ratternder Geräusche mehr erzeugen. Der Antrieb ist vielmehr flüsterleise geworden.

Das Kuppelglied wird mit Hilfe einer Art elektromotorischem Linearantriebs in Bewegung gesetzt.

Für die Umsetzung des Linearantriebes kommen mehrere Varianten in Frage.

Zunächst einmal kann es ein Schraubantrieb sein, wobei mit dem angetriebenen Ende des Schubglieds die Spindelmutter verbunden ist. Die andere Möglichkeit besteht darin, einen Endlosriemen um zwei Umlenkscheiben umlaufen zu lassen, von denen die eine elektromotorisch angetrieben ist. Dadurch entstehen zwischen den beiden Scheiben zwei zueinander parallel verlaufende Bandtrumme. Das angetriebene Ende des Kuppelglieds ist mit dem zugehörigen Bandtrum verbunden und kann so linear hin und her bewegt werden. Diese Anordnung ist außerordentlich platzsparend und liefert zwei gegenläufige Linearantriebe, so dass zwei Kuppelglieder für zwei Führungsschienen synchron mit gleichem Hub angetrieben werden können. Der Vorteil des Bandes das um zwei Riemenscheiben umläuft, besteht in dem geringen Platzbedarf in einer Richtung. Der Platzbedarf in dieser Richtung beschränkt sich auf den Durchmesser der Riemenscheiben, während der Abstand der Riemenscheiben voneinander geringfügig größer gewählt wird, als der erforderliche Hub der Rollobahn. Übertragen auf die Einbauverhältnisse, beispielsweise bei einer Heckscheibe, bedeutet dies, dass der Linearantrieb ohne weiteres im Bereich der Hutablage integriert werden kann. An dieser Stelle ist in Längsrichtung des Fahrzeugs wenig Platz vorhanden, in Querrichtung dagegen sehr viel, womit hier ohne Weiteres der Antrieb mit endlosem Riemen untergebracht werden kann.

Der Riemen ist vorzugsweise ein Zahnriemen, um einen schlupffreien Antrieb zu gewährleisten. Es kann sich allerdings auch ein Glattriemen verwendet werden, was den Vorteil hat, dass durch den dabei auftretenden Schlupf selbsttätig ein gewisser Einklemmschutz gewährleistet werden kann. Auch bei einem Glattriemen sind beim Antrieb von zwei Kuppelgliedern zwangsläufig immer beide Kuppelglieder miteinander synchronisiert und können auch bei auftretendem Schlupf den Synchronzustand nicht verlieren.

Zum Antrieb der Kuppelglieder kann auch eine Seilanordnung verwendet werden. Anstatt ein endloses Band um die beiden Scheiben umlaufen zu lassen, wird ein Seil verwendet, dessen Enden mit jener Umlenkscheibe fest verbunden sind, die elektromotorisch angetrieben ist. Gleichzeitig ist, bezogen auf eine Endstellung, auf dieser Riemenscheibe eine entsprechende Anzahl von Windungen gespeichert, damit, wenn die Scheibe in der entgegengesetzten Richtung in Umdrehungen versetzt wird, der Windungsspeicher allmählich abgebaut wird, während im Anschluss an das andere Seilende allmählich ein Windungsspeicher aufgebaut wird. Auch hierdurch ist ein schlupffreier Antrieb möglich, wenn die beiden Schubglieder mit ihrem Antriebsende mit den zwischen den beiden Scheiben laufenden Trummen verbunden sind. Die Anordnung wird sehr robust und zuverlässig, wenn zum Antrieb ein Seil verwendet wird, dass aus einer Aramidfaser bzw, einem Aramidfaden besteht.

Damit die Antriebskräfte ordnungsgemäß auf das Schubglied übertragen werden können, verläuft zweckmäßigerweise nehmen dem geraden Trum des Seils oder des Bandes bzw. der Spindelmutter eine Führungsschiene, die das Schubglied aufnimmt. Die Führungsschiene enthält eine Führungsnut deren Querschnitt sich aus einer Nutenkammer und einem Nutenschlitz zusammensetzt. Die lichte Weite der Nutenkammer ist größer als die lichte Weite des Schlitzes, wodurch eine ausknicksichere Führung des Schubgliedes erreicht wird, wenn der Durchmesser des Schubglied kleiner ist als die Weite des Nutenschlitzes.

Zur Kraftübertragung vom Seil bzw. Band auf das Schubglied kann ein Schlitten verwendet werden, der in der Nutenkammer läuft. Er ist über ein Verbindungsstück, das durch den Schlitz hindurch ragt mit dem Band oder Seil gekuppelt.

Für die Anordnung der Führungsschiene gegenüber der Ausrichtung des Bandes kommen mehrere Varianten in Frage, die Führungsschiene kann oberhalb oder unterhalb der Ebene verlaufen, die durch das Band bzw. in den Verlauf des Seils definiert ist, oder sie kann sich, bezogen auf diese Geometrie, neben dem Band bzw. dem Seil befinden.

Eine besonders stabile Führung der Rollobahn wird erreicht, wenn das Auszugsprofil der Rollobahn an beiden Enden geführt ist. Hierzu sind zwei Führungsschienen vorhanden, die beidseitig der aufgespannten Rollobahn verlaufen.

Die Führungsschiene kann auch hier wiederum eine Führungsnut enthalten deren Geometrie im Wesentlichen mit der Geometrie der Führungsnut in der Führungsschiene am Linearantrieb übereinstimmt. Im Übrigen sind Weiterbildungen der Erfindung Gegenstand von Unteransprüchen.

Beim Durchlesen der Figurenbeschreibung wird klar, dass es sich um ein Ausführungsbeispiel handelt, dass dazu dient einige Grundprinzipien zu erläutern, ohne jedoch in irgendeiner Weise beschränkend zu sein.

In der Zeichnung sind Ausführungsbeispiele des Gegenstandes der Erfindung dargestellt. Es zeigen:
- Fig. 1: ein Blick in den aufgebrochen gezeigten Fondbereich eines Pkw's unter Veranschaulichung der teilweise ausgezogenen Rollobahn eines Heckscheibenrollos;
- Fig. 2: den Grundaufbau des Heckscheibenrollos nach Fig. 1 in einer Prinzipdarstellung;
- Fig. 3: eine Detailansicht für den Linearantrieb des Heckscheibenrollos nach Fig. 2 unter Verwendung eines endlosen Bandes;
- Fig. 4 und 5: Ausführungsbeispiele für den Linearantrieb unter Verwendung eines Seils.

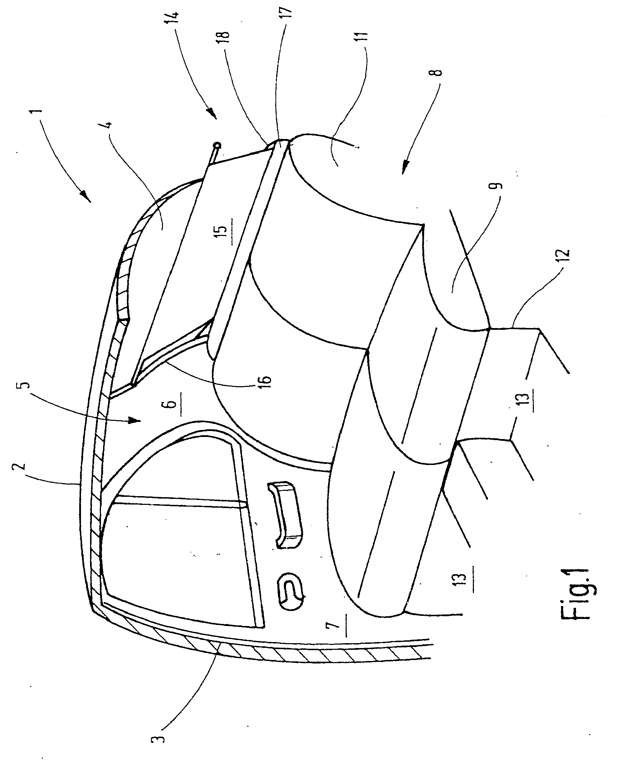

Fig. 1 stellt den aufgebrochenen abgeschnittenen Fondbereich eines Pkw dar. Die Figur veranschaulicht einen Blick auf die rechte Innenseite, die zu der weggebrochenen linken Innenseite spiegelbildlich ist. Die Darstellung ist vereinfacht, so sind beispielsweise Karosserieinnenstrukturen, wie Versteifungen und Befestigungsmittel, nicht gezeigt, da die Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule, die sich im Abstand zu der B-Säule 3 befindet. Die C-Säule 5 trägt eine Innenverkleidung 6.

Zwischen der B-Säule 3 und der C-Säule 5 ist an der B-Säule eine hintere rechte Seitentür 7 in der bekannten Weise anscharniert.

Auf der Höhe der hinteren rechten Seitentür befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogener Rollobahn 15 sowie eine der seitlichen Führungsschienen 16 zu erkennen. Die Führungsschiene 16 beginnt an einer hinter der RÜcksitzlehne 11 vorhandenen Hutablage 17 und verläuft neben der seitlichen Fensterkante. Die Führungsschiene besteht aus Kunststoff und ist in der die C-Säule 5 verkleidenden Innenverkleidung integriert.

Außerdem enthält die Hutablage 17 einen durchgehenden Auszugsschlitz 18, aus dem die Rollobahn 15 beim Ausfahren herausläuft.

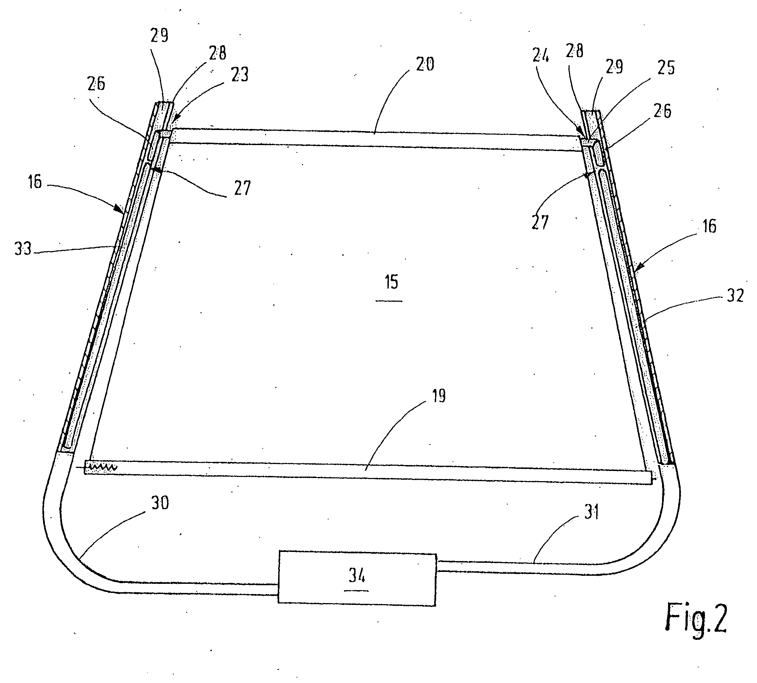

Der prinzipielle Aufbau des Heckscheibenrollos 14 ergibt sich aus Fig. 2.

Unterhalb der Hutablage 17, wie man aus Fig. 2 erkennt, erstreckt sich eine Wickelwelle 19, die drehbar gelagert und an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert ist und andernends in der Wickelwelle 19 festgelegt ist.

Die Rollbahn 15 weist einen etwa trapezförmigen Zuschnitt auf und ist an ihrer von der Wickelwelle 19 abliegenden Kante mit einer schlauchförmigen Schlaufe versehen. Durch die schlauchförmige Schlaufe führt ein Auszugsprofil oder Spriegel 22, in dem Endstücke 23, 24 die teleskopartig gelagert sind. Die Endstücke 23, 24 weisen ein Halsteil 25 auf, der einen kleineren Durchmesser aufweist, als ein an sich daran anschließendes Führungsglied 26. Das Führungsglied 26 hat die Gestalt eines kurzen zylinderförmigen Abschnitts.

Die Führungsglieder 26 laufen in den zueinander spiegelbildlich angeordneten Führungsschienen 16, die neben den beiden Seitenkanten des Heckfensters 4 bzw der aufgespannten Rollobahn 15 angeordnet sind. Jede Führungsschiene 16 enthält eine Führungsnut 27 deren Querschnittsprofil sich aus einem Nutenschlitz 28 und einer Nutenkammer 29 zusammensetzt. Der Durchmesser der kreisförmigen Nutenkammer 29 entspricht dem Durchmesser des Führungsglieds 26 während die Weite des Nutenschlitzes 28, die kleiner ist als der Durchmesser der kreisförmigen Nutenkammer 29, ein Durchtritt des Halsteils 25 gestattet.

Das untere Ende jeder Führungsschiene 16 ist über ein Führungsrohr 30, 31 mit einem Linearantrieb 32 gekuppelt.

In der Nutenkammer 29 der rechten Führungsschiene 16 verläuft ein im Querschnitt kreisförmiges Schub- oder Kuppelglied 32. Das Schub- oder Kuppelglied ist weitgehend druckfest und mit Hilfe der Führungsschiene sowie des Führungsrohrs 31 ausknicksicher geführt. Es kann auf diese Weise sowohl die Druckkraft als auch die Zugkraft, die von dem Linearantrieb 34 ausgeübt wird, auf das betreffende Führungsglied 26 übertragen. Dieses ist in der Zeichnung zwar mit einem geringfügigen Abstand gezeichnet, um dem Betrachter die Differenzierung zwischen Führungsglied 26 und Schubglied 32 zu ermöglichen, tatsächlich sind die beiden Bauteile jedoch zug- und druckfest miteinander verbunden.

In sinngemäß ähnlicher Weise verläuft durch die Nutenkammer 29 der linken Führungsschiene 16 und dem Führungsrohr 30 ein Schubglied 33, dass so das linke Ende des Auszugsprofils 20 zug- und druckfest mit dem Linearantrieb 34 kuppelt.

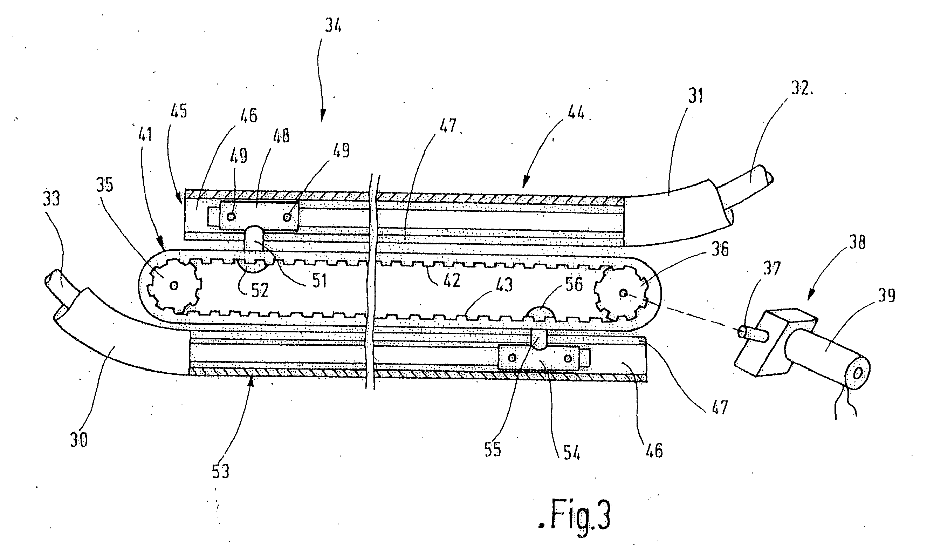

Der Aufbau des Linearantriebes ist in Fig. 3 vergrößert dargestellt.

Zu dem Linearantrieb 34 gehören zwei achsparallel drehbar gelagerte Zahnriemenscheiben 35 und 36, mit gleichem Wirkdurchmesser. Die Zahnriemenscheibe 35 ist lose drehbar gelagert, während die Zahnriemenscheibe 36 drehfest auf einer Ausgangswelle 37 eines Getriebemotors 38 sitzt. Der Getriebemotor 38 weist einen permanent erregten Gleitstrommotor 39 auf, der über das Bordnetz des Kraftfahrzeugs wahlweise mit Strom versorgt werden kann, um, je nach Polarität, die Zahnriemenscheibe 36 im Uhrzeigersinn oder im Gegenuhrzeigersinn zu drehen.

Um die beiden Zahnriemenscheiben 35 und 36 läuft ein endloser Zahnriemen 41 um, der einigermaßen straff gespannt ist. Hierdurch entstehen zwei zueinander parallel verlaufende Riementrumme 42 und 43

Neben dem Riementrum 42 verläuft eine Führungsschiene 44, die endseitig an das Führungsrohr 31 angeschlossen ist. Die Führungsschiene 44 enthält eine Führungsnut 45, die sich aus einer Nutenkammer 46 und einem Nutenschlitz 47 zusammensetzt. Die Dimensionen des Nutenschlitzes 47 und der Nutenkammer 46 stimmen mit den Abmessungen des Nutenschlitzes 28 und der Nutenkammer 29 der Führungsschienen 16 überein, so dass auch das in der Führungsschiene 44 erkennbare Ende des Schub- oder Kuppelgliedes 32 ausknicksicher geführt ist und durch den Nutenschlitz 47 auch nicht nach außen austreten kann.

In der Nutenkammer 46 läuft ein Schlitten 48, in dem das betreffende Ende des Schub- oder Kuppelgliedes 32 eingesteckt und mit Nieten 49 vernietet ist. Von dem Schlitten 48 führt ein Halsteil 51 nach außen zu dem Riementrum 42 und ist dort mit Hilfe einer Schraube oder eines Niets 52 befestigt, der durch das Riementrum 42 hindurch führt.

Neben der flachen Rückseite des Riementrums 43 verläuft eine weitere Führungsschiene 53, die denselben Aufbau hat, wie die Führungsschiene 44, weshalb für die einzelnen Elemente der Führungsschiene 53 dieselben Bezugszeichen verwendet werden, wie für die Führungsschiene 44.

In der Nutenkammer 46 der Führungsschiene 53 läuft ein Schlitten 54 mit einem Halsteil 55. In dem Schlitten 54 ist das betreffende Ende des Schub- oder Kuppelgliedes 33 verankert, während der Halsteil 55 durch den Nutenschlitz 47 herausführt und mittels einer Schraube oder eines Niets 56 mit dem Riementrum 43 verbunden ist.

Wie Fig. 3 erkennen lässt, liegen die beiden Führungsschienen 44 und 53 nicht nur an unterschiedlichen Seiten des durch den endlosen Zahnriemen 41 gebildeten Ovals, sondern sie zeigen auch in entgegengesetzter Richtung, d.h. von der oberen Führungsschiene 44 geht das Verbindungsrohr 31 nach rechts ab, während von der unteren Führungsschiene 53 das Verbindungsrohr 30 nach links weg führt. Dadurch können gegenläufige Bewegungen mit gleichem Hub erzeugt werden.

Die Wirkungsweise der Anordnung ist wie folgt, wobei sich aus der Funktionsbeschreibung auch noch eventuell fehlende Dimensionierungshinweise ergeben.

In der eingefahrenen Stellung ist die Rollobahn 15 weitgehend auf die Wickelwelle 19 aufgewickelt und wird mit Hilfe des Federmotors 21 nach wie vor unter Spannung gehalten. Fig. 3 zeigt den Linearantrieb 34 ebenfalls in der eingefahrenen Stellung des Rollos. Wie zu erkennen ist, befindet sich in dieser Position der Schlitten 48 neben dem freien Ende der Führungsschiene 44 und damit in der Nachbarschaft der lose laufenden Zahnriemenscheibe 35. Sinngemäß das Gleiche gilt für den Schlitten 54, der ebenfalls in der Nähe des freien Endes der Führungsschiene 53 steht und damit in der Nachbarschaft der angetriebenen Zahnriemenscheibe 36.

Wenn ausgehend von dieser Endstellung der Getriebemotor 38 durch Einschalten der Versorgungsspannung mit der entsprechenden Drehrichtung in Gang gesetzt wird, d.h. bezogen auf die Darstellung in Fig. 3 so, dass die angetriebene Zahnriemenscheibe 36 sich im Uhrzeigersinn dreht, zieht das Riementrum 42 den Schlitten 48, bezogen auf Fig. 3 von links nach rechts, d.h. von dem offenen Ende der Führungsschiene 44 in Richtung auf das Verbindungsrohr 31. Weiterhin schleppt der so angetriebene Zahnriemen 41 synchron mit dem gleichen Hub den Schlitten 44, bezogen auf Fig. 3, von rechts nach links. Der Schlitten 54 bewegt sich mit dem damit unbeweglich verbundenen Schub- oder Kuppelglied 33 in Richtung auf die lose laufende Zahnriemenscheibe 35. Die mit den betreffenden Schlitten 48 und 54 fest verbundenen Schub- oder Kuppelglieder 32, 33, werden somit in die betreffende Führungsschiene 16 vorgeschoben, und zwar mit derselben Geschwindigkeit und demselben Hub. Bei ihrer Vorschubbewegung werden sie das Auszugsprofil 20 vor sich her schieben und damit die Rollobahn 15 gegen die Wirkung des Federmotors 31 von der Wickelwelle 19 abwickeln. Am Ende ist die Rollobahn 15 vor dem Heckfenster 4 aufgespannt.

Wie sich aus der Funktionsbeschreibung ergibt, muss der Abstand der Drehachsen der beiden Zahnriemenscheiben 35 und 36 lang genug sein. Wenn die Rollobahn 15 die vollständig ausgefahrene Stellung erreicht, darf die Verankerung weder des Schlittens 48 an dem Zahnriemen 41, noch die Verankerung des Schlittens 54 an dem Zahnriemen 51 mit einer der beiden Riemenscheiben 35, 36 kollidieren. Am Ende des Hubs wird also der Schlitten 48 neben der Riemenscheibe 36 stehen, während der Schlitten 54 der Riemenscheibe 35 benachbart ist.

Zum Einfahren wird der Getriebemotor 38 mit der entgegengesetzten Drehrichtung eingeschaltet, so dass nunmehr über das Riementrum 43 eine Zugkraft auf die beiden Schlitten 48 und 54 übertragen wird. Entsprechend der Umlaufbewegung des Riemens 41 um die beiden Riemenscheiben 35 und 36, werden die Schub- oder Kuppelglieder 32, 33 aus den Führungsschienen 16 zurückgezogen. Sie neben dabei die mit ihren betreffenden Enden fest verbundenen Führungsstücke 26 mit. Gleichzeitig mit der Bewegung des Auszugsprofils 20 in Richtung auf die Wickelwelle 19 wird durch den Federmotor 21 entsprechend die Rollobahn 15 auf der Wickelwelle 19 aufgewickelt.

Die gezeigte Anordnung hat den wesentlichen Vorteil, dass die beiden Schub- oder Kuppelglieder 32, 33 an ihrer Außenumfangsfläche vollständig glatt sind. Hierdurch können keine lauten Geräusche entstehen, wenn die beiden Schub- oder Kuppelglieder 32, 33 beim Ein- oder Ausfahren über irgendwelche Kanten laufen, die aufgrund der Verbindung zwischen den Führungsrohren 30, 31 mit den Führungsschienen 16 bzw. 44 und 53 unvermeidbar sind.

Bei der praktischen Ausführungsform des gezeigten Fensterrollos können noch andere Stoßstellen bei den Führungseinrichtungen für die Schub- und Kuppelglieder 32, 33 auftreten, weil die Führungsrohre 30, 31, die in der Fig. 2 durchgehend gezeichnet sind, sich aus montagetechnischen Grünäen aus mehreren unterschiedlichen Abschnitten zusammensetzen können.

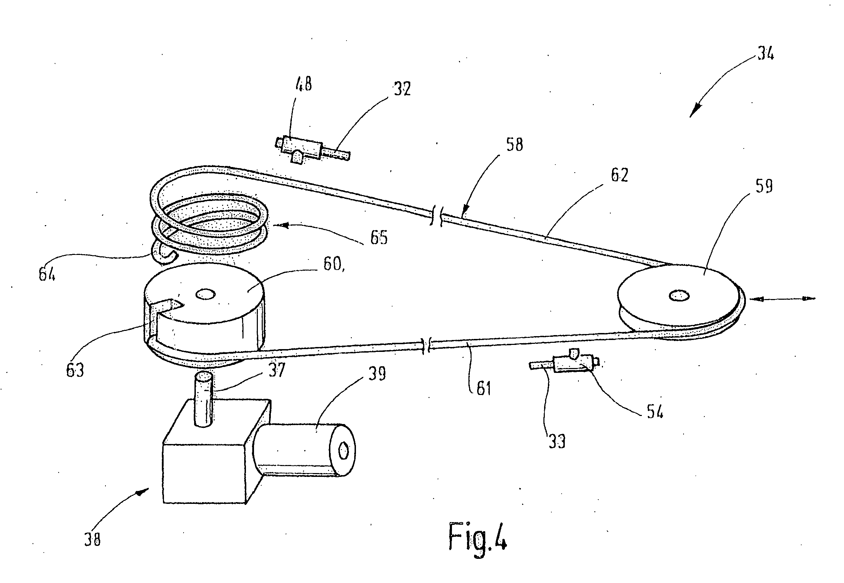

Fig. 4 zeigt eine alternative Ausführungsform für den Linearantrieb 34. Der wesentliche Unterschied besteht in der Verwendung eines Seil 58 anstelle des Zahnriemens 41. Fig. 4 beschränkt sich auf die Darstellung des Antriebs für das Seil 58, denn die Anordnung der Führungsschiene 54 und 53 ist ähnlich, wie dies in Fig. 3 gezeigt ist.

Entsprechend der Verwendung des Seils ist eine Seilumlenkscheibe 59 vorhanden, zu der achsparallel eine Seilantriebsscheibe 61 gelagert ist. Die Seilantriebsscheibe 61 steckt drehfest auf der Ausgangswelle 37 des Getriebemotors 38 der denselben Aufbau hat, wie dies im Zusammenhang mit Fig. 3 bereits erläutert wurde.

An der Seilantriebsscheibe ist in einem Befestigungsschlitz ein Ende des Seils 58 festgelegt. Es führt von der Seilantriebsscheibe 61 zu der Seilumlenkscheibe 59 um diese herum wieder zurück zu der Seilantriebsscheibe 61. Zwischen der Einlaufstelle des Seils 58 und dem betreffenden Seilende 63, das wiederum in dem Verankerungsschlitz 62 verankert ist, bildet das Seil 68 einen Windungsspeicher 64. Mit anderen Worten, das Seil 58 liegt zwischen der Einlaufstelle und der Verankerung in mehreren Windungen um die Seilantriebsscheibe 61 herum. Die Länge des hierdurch gespeicherten Seils entspricht mindest dem Achsabstand zwischen der Seilumlenkscheibe 59 und der Seilantriebsscheibe 61.

Wenn diese Art von Seilantrieb in Gang gesetzt wird, in dem durch den Getriebemotor 38 die Seilantriebsscheibe 61, bezogen auf Fig. 4, im Uhrzeigersinne gedreht wird, wickelt sich das Seiltrum 61 zunehmend auf der Seilantriebsscheibe 60 auf. Gleichzeitig wickelt sich Seil im Bereich des Seiltrums 61 von der Seilantriebscheibe 60 ab, d.h. der Windungsspeicher 65 leert sich allmählich, während im Anschluss an das Seiltrum 61 sich ein Windungsspeicher auf der Seilantriebsscheibe 60 aufbaut.

Mit den beiden Seiltrummen 61 und 62 ist, wie in Verbindung mit Fig. 3 erläutert, der jeweiligen Schlitten 48 bzw. 54 verbunden, wie dies in Fig. 4 angedeutet ist. Dass sich die beiden Seiltrumme 61, 62 in derselben Weise wie die Bandtrumme 42, 43 gegenläufig bewegen, kann bei der entsprechenden Befestigung der beiden Schlitten 48, 54 die erforderliche gegenläufige Bewegung der Schub- und Kuppelglieder 32, 33 erzeugt werden, wie dies oben eingehend erläutert ist.

Der Antrieb nach Fig. 4 ist schlupffrei.

Eine besonders zuverlässige Anordnung wird erhalten, wenn das Seil aus einem Aramidfaden, beispielsweise Kevlar, besteht. Es kann sich hierbei auch um ein Monofilament handeln.

Die Figuren lassen weiter erkennen, dass die beiden betreffenden, den Linearantrieb 34 benachbarten Enden der Schub- und Kuppelglieder 32, 33 über den Zahnriemen 41 bzw. das Seil 58 mit konstantem Abstand verbunden sind. Demzufolge ist ein Schlupf, der zwischen dem Antriebsmotor 38 und dem Riemen 41 bzw. dem Seil 58 auftritt, für die Funktion völlig unschädlich. Damit kann anstelle des formschlüssigen Antriebs, wie er in den Fig. 3 und 4 gezeigt ist, auch ein schlupfbehandelter Antrieb verwendet werden.

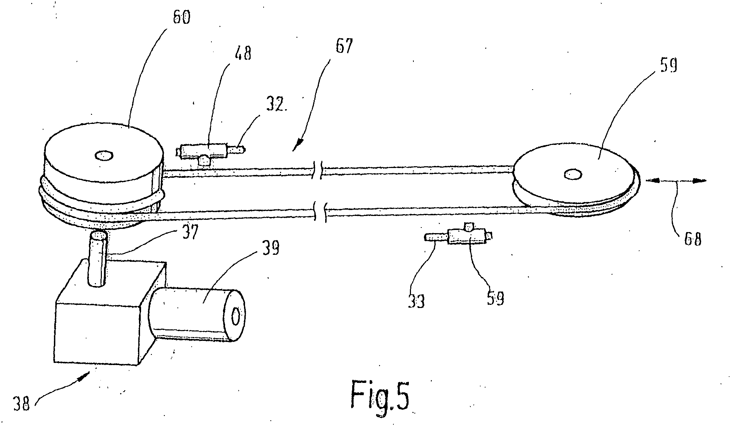

Fig. 5 zeigt in stark schematisierter Form einen solchen Antrieb. Anstelle des Seils 58 mit den beiden offenen Enden, die an der Seilantriebscheibe 60 verankert sind, wird ein geschlossener Seilring 67 verwendet. Der Seilring liegt um die Seilumlenkscheibe 59 einfach herum, während er auf der Seilantriebsscheibe 60 ein oder zwei vollständige Windungen bildet. Die Seilantriebsscheibe 60 wirkt damit ähnlich wie ein Winsch, so dass es möglich ist, wiederum die an den beiden Seiltrummen 61 und 62 festgelegten Schlitten 48 und 54 in Gang zu setzen.

Damit die Anordnung nach Fig. 6 ordnungsgemäß arbeiten kann, ist beispielsweise die Seilscheibe 59 in Richtung parallel zu dem Doppelpfeil 68 verschieblich gelagert, um den Seilring 67 ständig unter einer ausreichenden Vorspannung zu halten.

Die Erfindung ist in Verbindung mit einem Heckscheibenrollo mit zwei Führungsschienen erläutert. Das gezeigte Antriebskonzept mit Linearantrieb und glatten Schub- und Kuppelgliedern, kann auch bei Seitenfensterscheiben zum Einsatz kommen, da die Lage der Führungsschienen innerhalb des Fahrzeugs von dem Erfindungsgedanken unabhängig ist. Insbesondere ist das Antriebskonzept auch in Zusammenhang mit Dachfenstern von Fahrzeugen verwendbar und/oder Seiten- oder Frontscheiben. Die Verwendung von Rollos an Seiten- und Dachfenstern ist beispielsweise in der DE 100 40 624 gezeigt, auf die hier Bezug genommen ist.

Ein Fensterrollo für Kraftfahrzeuge weist neben der Rollobahn Führungsschienen auf. In den Führungsschienen laufen, knicksicher geführt, Schub- bzw. Druckglieder, die eine glatte Außenseite aufweisen. Der Antrieb dieser Schub- oder Druckglieder geschieht mit Hilfe eines Linearantriebs, der mit Riemen oder Seilen aufgebaut ist.

## Patentansprüche

1. Fensterrollo (14) für Kraftfahrzeuge,
mit einer Wickelwelle (19), die drehbar gelagert ist,
mit einem Federmotor (21), der mit der Wickelwelle (19) gekuppelt ist um die Wickelwelle (19) in einer Drehrichtung in Umdrehungen zu versetzen,
mit einem Auszugsprofil (20),
mit einer Rollobahn (15), die mit einer Kante an der Wickelwelle (19) und mit einer anderen Kante an dem Auszugsprofil (20) befestigt ist
mit wenigstens einer Führungsschiene (16) die seitlich der ausgezogenen Rollobahn (15) verläuft und mittels derer das Auszugsprofil (20) wenigsten an einem Ende geführt ist,
mit wenigstens einem linienförmigen Kuppelglied (32,33), das mit dem an der Führungsschiene (16) geführten Ende des Auszugsprofils (20) zusammenwirkt, um das Auszugsprofil (20) zumindest im Sinne eines Ausziehens der Rollobahn (15) zu bewegen, wobei das Schublied (32,33) über seine gesamte Länge an seiner Außenumfangsfläche glatt ist, und
mit einem elektromotorischen Linearantrieb (34), der auf das Kuppelglied (32,33) einwirkt, um das Kuppelglied (32,33) in Sinne des Ausziehens der Rollobahn (15) zu bewegen.

2. Fensterrollo nach Anspruch 1, **dadurch gekennzeichnet, dass** das Schubglied (32,33) an seinem angetriebenen Ende über den zum Ausziehen der Rollobahn (15) erforderlichen Bewegungshub ausknicksicher geführt ist.

3. Fensterrollo nach Anspruch 1, **dadurch gekennzeichnet, dass** der Linearantrieb (34) eine gerade verlaufende Führungsnut (45) umfasst, in der ein Schlitten (48,54) geführt ist, mit dem das von dem Auszugsprofil (20) abliegende Ende des Kuppelglieds (32,33) zug- und/oder druckfest verbunden ist.

4. Fensterrollo nach Anspruch 3, **dadurch gekennzeichnet, dass** der Schlitten (48,54) einen aus der Führungsnut (45) nach außen ragenden Betätigungsfortsatz (51,55) aufweist.

5. Fensterrollo nach Anspruch 3, **dadurch gekennzeichnet, dass** die Führungsnut (45) sich, im Querschnitt gesehen, aus einer Nutenkammer (46) und einem Nutenschlitz (47) zusammensetzt, wobei die Weite der Nutenkammer (46) größer ist als die lichte Weite des Nutenschlitzes (47) derart, dass sich eine hinterschnittene Führungsnut (45) ergibt.

6. Fensterrollo nach Anspruch 1, **dadurch gekennzeichnet, dass** der Linearantrieb (34) einen endlosen Riemen (41) oder einen geschlossenen Seilring (67) aufweist, der um zwei Scheiben (35, 36; 59, 60) umläuft, von denen die eine elektromotorisch angetrieben ist.

7. Fensterrollo nach Anspruch 1, **dadurch gekennzeichnet, dass** der Linearantrieb (34) zwei drehbar gelagerte Scheiben (59,60) aufweist, von denen die eine elektromotorisch angetrieben ist und die andere lose drehbar gelagert ist, und dass um beide Scheiben (59,60) ein Seil (58) umläuft, dessen freie Enden mit der Scheibe (60) schlupffrei verbunden sind, die elektromotorisch angetrieben ist.

8. Fensterrollo nach Anspruch 6 oder 7, **dadurch gekennzeichnet, dass** das von dem Auszugsprofil (20) abliegende Ende des Kuppelglieds (32,33) zug- und druckfest mit dem Riemen oder dem Seil gekuppelt ist.

9. Fensterrollo nach Anspruch 6 oder 7, **dadurch gekennzeichnet, dass** das Seil (58,67) von einem Aramidfaden gebildet ist.

10. Fensterrollo nach Anspruch 6 oder 7, **dadurch gekennzeichnet, dass** die lose laufende Umlenkscheibe (35,59) translatorisch gelagert ist, wobei die translatorische Achse die Drehachse der anderen Scheibe (36,60) schneidet.

11. Fensterrollo nach Anspruch 1, **dadurch gekennzeichnet, dass** zwei Führungsschienen (16) vorgesehen sind, die neben beiden Seiten der Rollobahn (15) verlaufen.

12. Fensterrollo nach Anspruch 1, **dadurch gekennzeichnet, dass** der Abstand der Führungsschienen (16) sich, ausgehend von der Wickelwelle (19), in Richtung auf das von der Wickelwelle (19) abliegende Ende, aufeinander zu bewegen.

13. Fensterrollo nach Anspruch 1, **dadurch gekennzeichnet, dass** die Führungsschiene (16) eine Führungsnut (27) enthält, deren Querschnittsprofil sich aus einer Nutenkammer (29) und einem Nutenschlitz (28) zusammensetzt, wobei die lichte Weite der Nutenkammer (29) größer ist, als die lichte Weite des Schlitzes (28) derart, dass eine hinterschnittene Nut (27) entsteht.

14. Fensterrollo nach Anspruch 5 oder 13, **dadurch gekennzeichnet, dass** die Nutenkammer (29,46) einen Kreisquerschnitt aufweist.

15. Fensterrollo nach Anspruch 13, **dadurch gekennzeichnet, dass** das Auszugsprofil (20) Endstücke (23,24) aufweist, mit Endgliedern (26), deren Querschnittsprofil an den Querschnitt der Nutenkammer (29) angepasst ist.

16. Fensterrollo nach Anspruch 1, **dadurch gekennzeichnet, dass** das Kuppelglied (32,33) in der Nutenkammer (29) der seitliche Führungsschiene (16) geführt ist.

17. Fensterrollo nach Anspruch 16, **dadurch gekennzeichnet, dass** das Kuppelglied (32,33) mit dem Führungsglied (26) des Auszugsprofils (20) druck- und zugfest gekuppelt ist.
